# EUROPEAN PATENT SPECIFICATION

(11) **EP 2 018 677 B1**
(45) Date of publication and mention of the grant of the patent: **25.12.2013**
(21) Application number: 07746441.0
(22) Date of filing: 10.05.2007
(51) Int. Cl.: H01M 4/02

(54) **ELECTRODE ACTIVE MATERIAL WITH HIGH CAPACITY**
AKTIVES LEISTUNGSSTARKES ELEKTRODENMATERIAL
MATIÈRE ACTIVE D'ÉLECTRODE À HAUTE CAPACITÉ

(30) Priority: 12.05.2006 KR 20060042908
(43) Date of publication of application: 28.01.2009
(73) Proprietor: LG Chemical Limited, Seoul 150-721 (KR)
(72) Inventor: KWON, Ou-Jung, Daejeon 305-380 (KR); CHANG, Won-Seok Rm. 402, Jungwon Jutaek, Chungcheongbuk-do 363-883 (KR); LEE, Ki-Young, Daejeon 305-380 (KR); LEE, Sco-Jae, Daejeon 305-380 (KR); KIM, Ki-Tae, Daejeon 305-390 (KR); LEE, Yong-Ju, Daejeon 305-727 (KR)
(74) Representative: HOFFMANN EITLE
(86) International application number: PCT/KR2007/002288
(87) International publication number: WO 2007/133005

(56) References cited:
- EP-A2- 1 102 339
- EP-A2- 1 205 989
- EP-A2- 1 758 199
- WO-A1-2004/114439
- KR-A- 20060 087 003
- KR-A- 20060 103 031
- KR-B1- 100 571 267
- US-A1- 2002 164 479

## Description

### Technical Field

The present invention relates to an electrode active material with high capacity, a method for preparing the same, and an electrochemical device comprising the same.

### Background Art

In general, a lithium secondary battery, a typical example of electrochemical devices, is obtained by using electrode active materials capable of lithium ion intercalation/ deintercalation for a cathode and an anode, and by injecting an organic electrolyte or a polymer electrolyte between the cathode and the anode. Such lithium secondary batteries produce electric energy via redox reactions upon the lithium ion intercalation/ deintercalation at the cathode and the anode.

Currently, carbonaceous materials are widely used as electrode active materials forming anodes for lithium secondary batteries. However, it is required to use an electrode active material with high capacity in order to further improve the capacity of a lithium secondary battery.

To satisfy the above requirement, many studies have been conducted to develop novel materials other than carbonaceous materials. Among such materials, most recent studies have focused on: (1) silicon-carbon composite materials; (2) oxide materials including SiOₓ or SnOₓ; and (3) composite materials comprising mixtures of oxide materials (2) with carbonaceous materials.

Materials (1) provide high discharge capacity and high initial efficiency. However, materials (1) are problematic in that they have a low charge/discharge efficiency and poor cycle life characteristics. Materials (2) have a high charge/discharge efficiency. However, materials (2) are problematic in that they have relatively low discharge capacity as compared to materials (1), and they show significantly high irreversible capacity due to the bonding between lithium ions and oxygen atoms upon charge, resulting in an extremely low initial efficiency. Further, materials (3) partially solve the problems occurring in materials (1) and (2). However, they have a disadvantage in that carbonaceous materials mixed therein cause a drop in capacity.

However, the above electrode active materials according to the prior art still provide unsatisfactory cycle life characteristics, and thus cannot be applied to practical lithium secondary batteries as electrode active materials.

### Disclosure of Invention

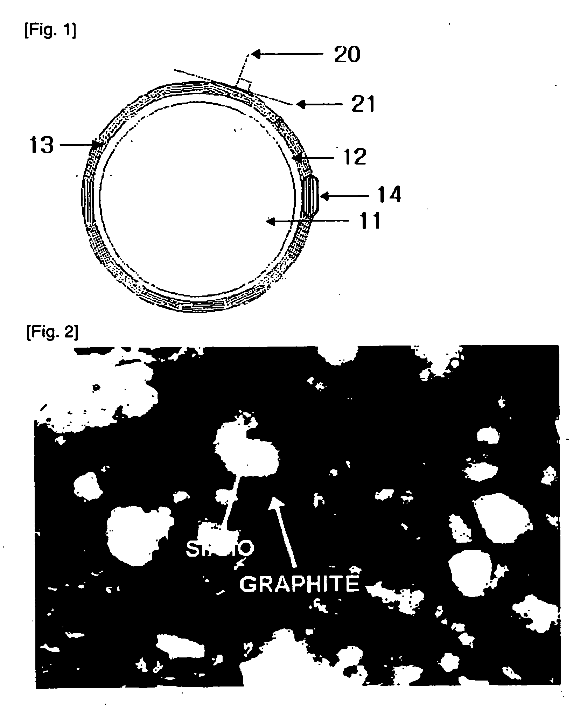

Document US 2002/164479 discloses an electrode active material for a lithium secondary battery comprising a complex particle (3) in contact with a graphite particle (2), the particles (3) and (2) being coated with an amorphous carbon layer (4) (figure 1).

WO 2004/114439 discloses an anode for a lithium secondary cell comprising a core layer, which can be made of Si, an amorphous carbon layer coated on the surface of the core and a crystalline carbon layer coated on the amorphous carbon layer.

### Technical Problem

Therefore, the present invention has been made in view of the above-mentioned problems. It is an object of the present invention to provide an electrode active material having high charge/discharge capacity and excellent cycle life characteristics, the electrode active material comprising an amorphous carbon layer and a crystalline carbon layer successively on a surface of a core layer containing a metal (metalloid)/a metal (metalloid) oxide. The electrode active material according to (claim 1 ) inhibits variations in volume of the core layer that may occur during charge/ discharge cycles, and maintains a high electric conductivity and conduction paths among electrode active material particles. It is another object of the present invention to provide an electrochemical device comprising the above electrode active material. It is still another object of the present invention to provide a method for preparing the above electrode active material.

### Technical Solution

In order to achieve the above-mentioned object, there is provided an electrode active material comprising:

(a) a core layer containing (i) a metal and/or metalloid (selected from Si, Al, Sn, Sb, Bi, As, Ge, Pb, Zn, Cd, Iu, Tl, Ga ) and (ii) a metal oxide and/or metalloid oxide (selected from SiOₓ, AlOₓ, SnOₓ, SbOₓ, BiOₓ, AsOₓ, GeOₓ, PbOₓ, ZnOₓ, CdOₓ, JuOₓ, TlOₓ, GaOₓ, wherein 0<x<2; )

(b) an amorphous carbon layer coated on a surface of the core layer; and

(c) a crystalline carbon layer coated on the amorphous carbon layer. There is also provided an electrochemical device comprising the above electrode active material.

Additionally, there is provided a method for preparing the above electrode active material, the method comprising the steps of:

(1) mixing (i) a metal and/or metalloid selected from Si, Al, Sn, Sb, Bi, As, Ge, Pb, Zn, Cd, Iu, Tl, Ga with (ii) a metal oxide and/or metalloid oxide to provide a first mixture, and further mixing the first mixture with crystalline carbon to provide a second mixture; and

(2) carrying out mechanical alloying of the second mixture in the presence of balls.

Further, there is provided another method for preparing the above electrode active material, the method comprising the steps of:

(1) coating an amorphous carbon layer onto a core layer formed of (i) a metal and/or metalloid selected from Si, Al, Sn, Sb, Bi, As, Ge, Pb, Zn, Cd, Iu, Tl, Ga and (ii) a metal oxide and/or metalloid oxide selected from SiOₓ, AlOₓ, SnOₓ, SbOₓ, BiOₓ, AsOₓ, GeOₓ, PbOₓ, ZnOₓ, CdOₓ, JuOₓ, TlOₓ, GaOₓ, wherein 0<x<2; via a thin film vapor deposition process, or coating pitch or an organic precursor onto a core layer formed of (i) a metal and/or metalloid and (ii) a metal oxide and/or metalloid oxide, and heat treating and carbonizing the coating layer to allow amorphous carbon to be coated on the core layer; and

(2) coating slurry containing a crystalline carbonaceous material onto the resultant product of step (1), followed by drying, to form a crystalline carbon layer.

### Brief Description of the Drawings

The foregoing and other objects, features and advantages of the present invention will become more apparent from the following detailed description when taken in conjunction with the accompanying drawings in which:

FIG. 1 is a sectional view of the electrode active material that may be prepared according to a preferred embodiment of the present invention;

FIG. 2 is a photographic view of the electrode active material according to Example 1, taken by SEM (scanning electron microscopy);

FIG. 3 is a graph showing the ratio of residual discharge capacity of each of the batteries according to Example 1 and Comparative Example 1 as a function of cycle number; and

FIG. 4 is a graph showing the charge/discharge efficiency of each of the batteries according to Example 1 and Comparative Example 1 as a function of cycle number.

### Mode for the Invention

The electrode active material according to the present invention comprises a core layer containing (i) a metal and/or metalloid (selected from Si, Al, Sn, Sb, Bi, As, Ge, Pb, Zn, Cd, Iu, Tl, Ga) and (ii) a metal oxide and/or metalloid oxide selected from SiOₓ, AlOₓ, SnOₓ, SbOₓ, BiOₓ, AsOₓ, GeOₓ, PbOₓ, ZnOₓ, CdOₓ, JuOₓ, TlOₓ, GaOₓ, wherein 0<x<2.

As used herein, the expression "a metal and/or metalloid" is an abbreviation for a metal or metalloid, or a metal and metalloid. Also, the expression "a metal oxide and/ or metalloid oxide" is an abbreviation for a metal oxide or metalloid oxide, or a metal oxide and metalloid oxide.

The electrode active material according to the present invention can accomplish high charge/discharge capacity by virtue of the core layer containing (i) a metal and/or metalloid, and (ii) a metal oxide and/or metalloid oxide.

Additionally, the electrode active material according to the present invention can inhibit variations in volume of the core layer that may occur during repeated lithium intercalation/deintercalation by virtue of the amorphous carbon layer coated on the surface of the core layer and the crystalline carbon layer coated on the amorphous carbon layer, and thus can provide improved cycle life characteristics.

Further, a composite material of (i) a metal and/or metalloid with (ii) a metal oxide and/or metalloid oxide, such as Si/SiOₓ (wherein 0<x<2), is capable of repeating charge/discharge cycles due to its electron conductivity and lithium ion conductivity. However, such composite materials have a low electron conductivity and cannot allow smooth lithium intercalation/ deintercalation. Therefore, a crystalline carbon layer is formed on an electrode active material layer to reduce the contact resistance between the electrode active material layer and a collector, as well as among the electrode active material particles, and thus to improve lithium intercalation/deintercalation characteristics.

Hereinafter, the present invention will be explained in more detail.

The coating layer including the amorphous carbon layer and the crystalline carbon layer may be partially or totally coated on the surface of the core layer.

FIG. 1 is a sectional view of the electrode active material that may be prepared according to a preferred embodiment of the present invention. As shown in FIG. 1, the surface of the core layer 11 formed of an electrochemically rechargeable Si and SiOₓ (wherein 0<x<2) is coated with a surface layer including an amorphous carbon layer 12 and a crystalline carbon layer 13.

In the core-forming materials, i.e. (i) a metal and/or metalloid, and (ii) a metal oxide and/or metalloid oxide, the metals in the metal and the metal oxide may be the same or different. This also applies to the metalloids in the metalloid and the metalloid oxide. For example, combinations including Si/SiOₓ, Sn/SnOₓ, Si/SnOₓ or Sn/SiOₓ (wherein 0<x<2) may be used in the core layer.

Particular examples of the crystalline carbon include natural graphite, artificial graphite, etc., which have a high degree of graphitization. Particular examples of the graphite-based material include MCMB (MesoCarbon MicroBead), carbon fiber, natural graphite, or the like.

Particular examples of the amorphous carbon include coal tar pitch, petroleum pitch, and carbonaceous materials obtained by heat treatment of various organic materials.

In a preferred embodiment of the electrode active material according to the present invention, the crystalline carbon layer comprises sheet-like carbon layer units connected with each other, wherein each sheet-like carbon layer unit is formed of at least two carbon layers having the same c-axis direction. In other words, as shown in FIG. 1, the term sheet-like carbon layer unit 14 refers to a plurality of sheet-like carbon layers having the same c-axis direction in each crystal as the concept of a unit. The sheet-like carbon layer units are connected with each other at the edge portions thereof to form the crystalline carbon layer. Additionally, the above crystalline carbon layer structure can inhibit variations in volume of the core layer that may occur during repeated lithium intercalation/deintercalation.

Preferably, as shown in FIG. 1, the c-axis direction 20 of the sheet-like carbon layer units is perpendicular to the tangent direction 21 of the electrode active material particles according to the present invention. Because the c-axis direction of the sheet-like carbon layer units is perpendicular to the tangent direction of the electrode active material particles, edge portions of one sheet-like carbon layer unit are connected to those of another sheet-like carbon layer unit, and no edge portions are exposed to the exterior. If any edge portion of each sheet-like carbon layer unit is exposed, such exposed portions may contact with an electrolyte to form a coating film and generate an irreversible reaction.

According to the present invention, the core layer comprises (i) a metal and/or metalloid and (ii) a metal oxide and/or metalloid oxide in a ratio of 5-95 parts by weight: 95-5 parts by weight.

If the metal and/or metalloid are/is used in an amount of less than 5 parts by weight, it is not possible to obtain high discharge capacity and high initial efficiency. On the other hand, if the metal oxide and/or metalloid oxide are/is used in an amount of less than 5 parts by weight, it is not possible to sufficiently improve charge/discharge efficiency.

According to the present invention, the electrode active material comprises the core layer, the amorphous carbon layer and the crystalline carbon layer, successively, in a ratio of [core layer : amorphous carbon layer: crystalline carbon layer] of 70∼30 parts by weight : 0.1∼50 parts by weight: 29.9∼70 parts by weight.

If the core layer capable of repeating lithium intercalation/deintercalation is present in an amount of less than 30 parts by weight, the electrode active material cannot serve as a high-capacity electrode active material due to its low reversible capacity. If the crystalline carbon layer is present in an amount of less than 29.9 parts by weight, it is not possible to ensure a sufficient degree of conductivity. Additionally, if the amorphous carbon layer is present in an amount of less than 0.1 parts by weight, it is not possible to inhibit a so-called swelling phenomenon sufficiently. On the other hand, if the amorphous carbon layer is present in an amount of greater than 50 parts by weight, there is a possibility of a drop in capacity and conductivity.

Preferably, the amorphous carbon layer has an interlayer spacing d002 of 0.34nm or more and a thickness of 5nm or more. If the amorphous carbon layer has a thickness of less than 5nm, it is not possible to sufficiently inhibit variations in volume of the core layer. If the interlayer spacing is less than 0.34nm, the amorphous carbon layer itself undergoes severe variations in volume during repeated charge/discharge cycles. Thus, it is not possible to sufficiently inhibit variations in volume of the core layer, resulting in degradation of cycle life characteristics.

Preferably, the crystalline carbon layer has an interlayer spacing d002 of 0.3354-0.35nm. The lowest critical value is the theoretical minimum interlayer spacing of graphite, and thus any value smaller than the lowest critical value does not exist. Carbon having an interlayer spacing greater than the highest critical value has poor conductivity, so that the crystalline carbon layer using the same shows low conductivity. Thus, in this case, lithium intercalation/ deintercalation cannot proceed smoothly.

Although there is no particular limitation in thickness of the crystalline carbon layer, the crystalline carbon layer preferably has a thickness of 1-10 µm. If the crystalline carbon layer has a thickness of less than 1 µm, it is difficult to ensure sufficient conductivity among electrode active material particles. On the other hand, if the crystalline carbon layer has a thickness greater than 10 µm, proportion of the carbonaceous materials to the electrode active material is too high to obtain high charge/discharge capacity.

The electrode active material according to the present invention can be obtained by the method comprising the steps of:

(1) mixing (i) a metal and/or metalloid with (ii) a metal oxide and/or metalloid oxide to provide a first mixture, and further mixing the first mixture with crystalline carbon to provide a second mixture; and

(2) carrying out mechanical alloying of the second mixture in the presence of balls.

Herein, the term "mechanical alloying" refers to a process for forming an alloy having a uniform composition by applying a mechanical force. Such mechanical alloying is carried out preferably in a high energy ball mill system.

In step (1), the first mixture may be obtained by mixing the metal and/or metalloid with the metal oxide and/or metalloid oxide in a ratio of 5∼95 parts by weight: 95∼5 parts by weight (metal and/or metalloid: metal oxide and/or metalloid oxide). Additionally, in step (1), the second mixture may be obtained by mixing the first mixture with crystalline carbon in a ratio of 70∼30 parts by weight: 30∼70 parts by weight (first mixture: crystalline carbon).

In step (2), the balls may be mixed with the second mixture obtained from the first step in a ratio of [balls: second mixture of the first step] of 50-98 parts by weight: 50-2 parts by weight. If the ratio is less than 50:50, it is not possible to transfer compression stress to the mixture. On the other hand, if the ratio is greater than 98:2, the balls are used in an excessive amount, resulting in a drop in productivity.

Further, the balls that may be used in the second step include stainless steel balls or zirconia balls.

In a variant, the electrode active material according to the present invention can be obtained by the method comprising the steps of:

(1) coating an amorphous carbon layer onto a core layer formed of (i) a metal and/or metalloid and (ii) a metal oxide and/or metalloid oxide via a thin film vapor deposition process, or coating pitch or an organic precursor onto a core layer formed of (i) a metal and/or metalloid and (ii) a metal oxide and/or metalloid oxide, and heat treating and carbonizing the coating layer to allow amorphous carbon to be coated on the core layer; and

(2) coating slurry containing a crystalline carbonaceous material onto the resultant product of step (1), followed by drying, to form a crystalline carbon layer.

In a preferred embodiment of the method, an amorphous carbon layer may be directly coated onto the metal/metal oxide forming the core layer via a thin film vapor deposition process, such as CVD (chemical vapor deposition) or PVD (physical vapor deposition). Otherwise, various organic precursors, such as petroleum-based pitch, coal tar pitch, phenolic resins, PVC (polyvinyl chloride) or PVA (polyvinyl alcohol), are coated onto the metal/metal oxide forming the core layer, and then carbonized via heat treatment under an inert atmosphere at a temperature of 500∼1300°C for 30 minutes-3 hours, so that an amorphous carbon layer can be coated on the core layer. Next, an adequate amount of solvent is added to a mixture containing 90-98 parts by weight of a crystalline carbonaceous material and 2∼10 parts by weight of a binder optionally with at most 5 parts by weight of a conductive agent, and the materials are mixed uniformly to provide slurry. Then, the slurry is coated onto the amorphous carbon layer, followed by drying, to form a crystalline carbon layer.

Further, the present invention provides an electrochemical device comprising the electrode active material according to the present invention. Such electrochemical devices include any devices in which electrochemical reactions occur, and particular examples thereof include all kinds of primary batteries, secondary batteries, fuel cells, solar cells or capacitors. Preferably, the electrochemical device is a secondary battery. A lithium secondary battery including a lithium metal secondary battery, lithium ion secondary battery, lithium polymer secondary battery or lithium ion polymer secondary battery is more preferred.

The electrochemical device may be manufactured by using the electrode active material according to the present invention via a conventional method known to one skilled in the art. In one embodiment of the method for manufacturing the electrochemical device, an electrode assembly having a cathode, an anode and a separator interposed between both electrodes is formed, and then an electrolyte is injected into the electrode assembly.

The electrode using the electrode active material according to the present invention may be manufactured by a conventional method known to those skilled in the art. For example, the electrode active material according to the present invention may be mixed with a binder and a solvent, and optionally with a conductive agent and a dispersant, and the mixture is agitated to provide slurry. Then, the slurry is applied onto a metal collector, and the collector coated with the slurry is compressed and dried to provide an electrode.

The binder and the conducive agent may be used in an amount of 1∼10 parts by weight and 1∼30 parts by weight, respectively, based on the weight of the electrode active material.

Particular examples of the binder that may be used in the present invention include polytertrafluoro ethylene (PTFE), polyvinylidene fluoride (PVdF), or the like.

There is no particular limitation in the conductive agent, as long as the conductive agent is an electron conductive material that causes no chemical change in a battery. In general, the conductive agent that may be used in the present invention includes carbon black, graphite, carbon fibers, carbon nanotubes, metal powder, conductive metal oxides, organic conductive agents, or the like. Commercially available conductive agents include acetylene black-based conductive agents (available from Chevron Chemical Company or Gulf Oil Company), Ketjen Black EC series (available from Armak Company), Vulcan XC-72 (available from Cabot Company) and Super P

### (available from MMM Co.)

The metal collector includes a metal with high conductivity. Any metal to which the electrode active material slurry can be adhered with ease can be used as long as it shows no reactivity in the drive voltage range of a battery using the same. Typical examples of the collector include mesh, foil, etc., obtained from aluminum, copper, gold, nickel, aluminum alloy or a combination thereof.

Also, there is no particular limitation in methods of applying the slurry onto the collector. For example, the slurry may be applied onto the collector via a doctor blade coating, dip coating or brush coating process. There is no particular limitation in amount of the slurry applied onto the collector. However, it is preferred that the slurry is applied in such an amount that the active material layer formed after removing a solvent or a dispersant can have a thickness of generally 0.005∼5mm, and preferably 0.05∼2mm.

Further, there is no particular limitation in methods of removing the solvent or the dispersant. However, it is preferred that the solvent or the dispersant is allowed to evaporate as quickly as possible, provided that no cracking occurs in the active material layer due to the stress concentration and no separation occurs between the active material layer and the collector. For example, the collector coated with the active material slurry may be dried in a vacuum oven at 50∼200°C for 0.5∼3 days.

The electrolyte may comprise a non-aqueous solvent and an electrolyte salt.

Any non-aqueous solvent currently used for a non-aqueous electrolyte may be used with no particular limitation. Particular examples of such non-aqueous solvents include cyclic carbonates, linear carbonates, lactones, ethers, esters, and/or ketones.

Particular examples of the cyclic carbonates include ethylene carbonate (EC), propylene carbonate (PC), butylene carbonate (BC), or the like. Particular examples of the linear carbonates include diethyl carbonate (DEC), dimethyl carbonate (DMC), dipropyl carbonate (DPC), ethylmethyl carbonate (EMC), methyl propyl carbonate (MPC), or the like. Particular examples of the lactone include gamma-butyrolactone (GBL). Particular examples of the ether include dibutyl ether, tetrahydrofuran, 2-methyltetrahydrofuran, 1,4-dioxane, 1,2-dimethoxyethane, or the like. Additionally, particular examples of the ester include methyl acetate, ethyl acetate, methyl propionate, methyl pivalate, or the like. Further, particular examples of the ketone include polymethylvinyl ketone. Such non-aqueous solvents may be used alone or in combination.

Any electrolyte salt currently used for a non-aqueous electrolyte may be used in the present invention with no particular limitation. Non-limiting examples of the electrolyte salt include a salt represented by the formula of A⁺B⁻, wherein A⁺ represents an alkali metal cation selected from the group consisting of Li⁺, Na⁺, K⁺ and combinations thereof, and B⁻ represents an anion selected from the group consisting of PF₆⁻, BF₄⁻, Cl⁻, Br, I⁻, ClO₄⁻, AsF₆⁻, CH₃CO₂⁻, CF₃SO₃⁻, N(CF₃SO₂)₂⁻, C(CF₂SO₂)₃⁻ and combinations thereof. A lithium salt is particularly preferred. Such electrolyte salts may be used alone or in combination.

The electrochemical device according to the present invention may further comprise a separator. There is no particular limitation in the separator that may be used in the present invention, as long as the separator is a porous material that serves to interrupt an internal short circuit in an electrode and is impregnated with an electrolyte. Non-limiting examples of the separator that may be used include a polypropylene-based, polyethylene-based, polyolefin-based porous separator, or composite porous separators including the above porous separators to which inorganic materials are added.

There is no particular limitation in the outer shape of the secondary battery according to the present invention. The secondary battery may be a cylindrical battery using a can, a prismatic battery, a pouch-type battery or a coin-type battery.

Reference will now be made in detail to the preferred embodiments of the present invention. It is to be understood that the following examples are illustrative only and the present invention is not limited thereto.

Example 1

Si was mixed with SiO in a ratio of 50 parts by weight:50 parts by weight to provide a first mixture (Si/SiO), which, in turn, was mixed with natural graphite in a ratio of 50 parts by weight:50 parts by weight to provide a second mixture.

Next, stainless steel balls having a diameter of 3 mm and the second mixture were introduced into a high energy ball mill system in a ratio of 80 parts by weight:20 parts by weight. The resultant mixture was subjected to mechanical alloying at a rotation speed of 600 rpm for 30 minutes to provide an electrode active material. FIG. 2 is a photographic view of the electrode active material taken by SEM.

Then, 100 parts by weight of the electrode active material powder obtained as described above, 10 parts by weight of PVDF as a binder and 10 parts by weight of acetylene black as a conductive agent were mixed, NMP was further added to the above mixture as a solvent, and then the resultant mixture was mixed thoroughly to provide uniform slurry. The slurry was coated onto copper foil with a thickness of 20 µm followed by drying and rolling. The coated foil was cut into a desired size via punching to provide an electrode.

As an electrolyte, a non-aqueous solvent comprising ethylene carbonate (EC) and ethyl methyl carbonate (EMC) in a ratio of 1:2 (v:v) and containing 1M LiPF₆ dissolved therein was used.

The electrode obtained as described above was used as an anode and lithium metal was used as a counter electrode. Then, a polyolefin-based separator was interposed between both electrodes and the electrolyte was injected thereto to provide a coin-type battery according to the present invention.

**Example 2**

An electrode active material and a battery were provided in the same manner as described in Example 1, except that Sn and SnO were used instead of Si and SiO.

**Comparative Example 1**

An electrode active material and a battery were provided in the same manner as described in Example 1, except that SiO was not used and Si was mixed with natural graphite in a ratio of 50 parts by weight:50 parts by weight.

**Comparative Example 2**

An electrode active material and a battery were provided in the same manner as described in Example 1, except that natural graphite was not used and Si was mixed with SiO in a ratio of 50 parts by weight:50 parts by weight.

**Experimental Example**

(Measurement of Residual Discharge Capacity)

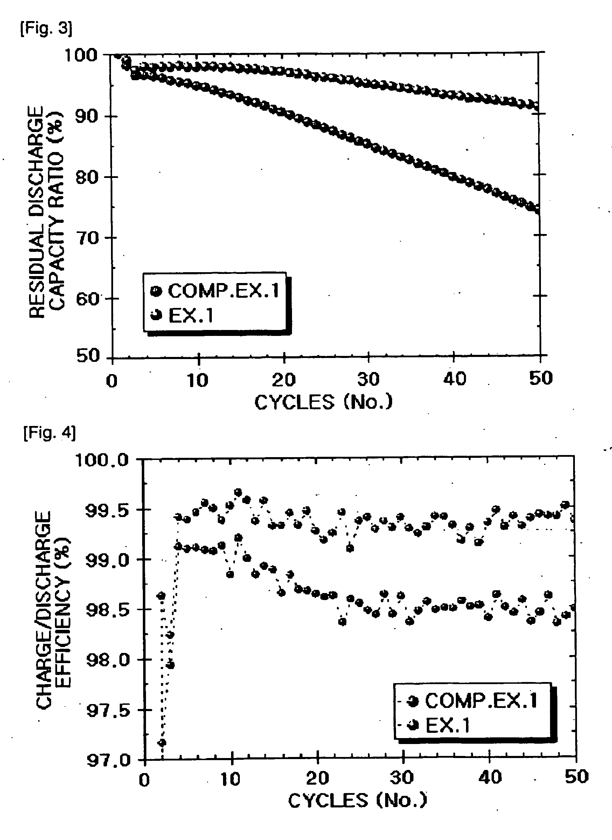

The residual discharge capacity of each of the batteries according to Example 1 and Comparative Example 1 was measured up to 50 charge/discharge cycles. The results are shown in FIG. 3.

As shown in FIG. 3, the battery obtained by using the electrode active material according to Example 1 maintains the initial capacity to a ratio of 91% or more even after fifty charge/discharge cycles. On the contrary, the battery obtained by using the electrode active material according to Comparative Example 1 maintains the initial capacity to a ratio of merely about 74% after fifty charge/discharge cycles.

Therefore, it can be seen from the above results that the electrode active material according to the present invention comprising a core layer formed of Si and oxide thereof (SiO) can improve the residual discharge capacity ratio.

(Measurement of Charge/Discharge Efficiency)

The charge/discharge efficiency of each of the batteries according to Example 1 and Comparative Example 1 was measured up to 50 charge/discharge cycles. The results are shown in FIG. 4.

As shown in FIG. 4, the battery obtained by using the electrode active material according to Example 1 maintains the charge/discharge efficiency to a ratio of about 99.2∼99.6%, even after fifty charge/discharge cycles. On the contrary, the battery obtained by using the electrode active material according to Comparative Example 1 maintains the charge/discharge efficiency to a ratio of about 98.3∼99% after fifty charge/discharge cycles.

Therefore, it can be seen from the above results that the electrode active material according to the present invention comprising a core layer formed of Si and oxide thereof (SiO) can improve the charge/discharge efficiency as well as the residual discharge capacity ratio.

(Measurement of Change in Thickness of Electrode)

Each of the batteries according to Examples 1 and 2 and Comparative Examples 1 and 2 was subjected to two charge/discharge cycles, and measured for variations in volume. The results are shown in the following Table 1.

Table 1

**[Table 1]**

| [Table ] | | | |
|---|---|---|---|
| | Initial electrode thickness(*µ*m) | Electrode thickness after 2 charge/ discharge cycles(*µ*m) | Electrode expansion ratio(%)(Δt/tᵢ) |
| Ex. 1 | 33 | 46 | 40 |
| Ex. 2 | 35 | 47 | 34 |
| Comp. Ex. 1 | 25 | 70 | 180 |
| Comp. Ex. 2 | 22 | 51 | 132 |

As shown in Table 1, the battery according to Example 1 shows a variation in volume of about 40% (33*µ*m→46*µ*m), while the battery according to Comparative Example 1 shows a variation in volume of about 180% (25*µ*m→70*µ*m) and the battery according to Comparative Example 2 shows a variation in volume of about 132% (22*µ*m→51*µ*m). This indicates that the electrode active material according to the present invention has an effect of inhibiting a volume expansion.

### Industrial Applicability

As can be seen from the foregoing, the electrode active material according to the present invention, comprising a core layer formed of (i) a metal and/or metalloid selected from Si, Al, Sn, Sb, Bi, As, Ge, Pb, Zn, Cd, Iu, Tl, Ga, and (ii) a metal oxide and/or metalloid oxide selected from SiOₓ, AlOₓ, SnOₓ, SbOₓ, BiOₓ, AsOₓ, GeOₓ, PbOₓ, ZnOₓ, CdOₓ, JuOₓ, TlOₓ, GaOₓ, wherein 0<x<2, maintains high charge/discharge capacity. Also, due to the presence of the amorphous carbon layer and the crystalline carbon layer, the electrode active material according to the present invention inhibits variations in volume of the core layer that may occur during repeated lithium intercalation/deintercalation. Therefore, the electrode active material according to the present invention can provide a battery with improved cycle life characteristics.

## Claims

1. An electrode active material comprising:
(a) a core layer containing (i) at least one metal and/or metalloid selected from Si, Al, Sn, Sb, Bi, As, Ge, Pb, Zn, Cd, In, Tl, Ga and an alloy thereof, and (ii) at least one metal oxide and/or metalloid oxide selected from SiOₓ, AlOₓ, SnOₓ, SbOₓ, BiOₓ, AsOₓ, GeOₓ, PbOₓ, ZnOₓ, CdOₓ, InOₓ, TlOₓ and GaOₓ, wherein 0<x<2;
(b) an amorphous carbon layer coated on the surface of the core layer; and
(c) a crystalline carbon layer coated on the amorphous carbon layer.

2. An electrode active material according to Claim 1, wherein the crystalline carbon layer comprises sheet-like carbon layer units connected with each other, each sheet-like carbon layer unit being formed of at least two carbon layers having the same c-axis direction.

3. An electrode active material according to Claim 2, wherein the c-axis direction of the sheet-like carbon layer units is perpendicular to the tangent direction of the electrode active material particles.

4. An electrode active material according to any preceding claim, wherein the metal(s) and/or metalloid(s) and the metal oxide(s) and/or metalloid oxide(s) are in a ratio of 5-95 parts by weight : 5-95 parts by weight.

5. An electrode active material according to any preceding claim, wherein the core layer, the amorphous carbon layer and the crystalline carbon layer are in a ratio of 30-70 parts by weight : 0.1-50 parts by weight : 29.9-70 parts by weight.

6. An electrode active material according to any preceding claim, wherein the crystalline carbon layer has an interlayer spacing (d002) of 0.3354-0.35 nm and a thickness of 1-10 µm.

7. An electrode active material according to any preceding claim, wherein the amorphous carbon layer has an interlayer spacing (d002) of 0.34 nm or more and a thickness of 5 nm or more.

8. An electrochemical device comprising an electrode active material as defined in any preceding claim.

9. An electrochemical device according to Claim 8, which is a secondary battery.

10. A method for preparing an electrode active material as defined in any of Claims 1-7, the method comprising the steps of:
(1) mixing (i) at least one metal and/or metalloid selected from Si, Al, Sn, Sb, Bi, As, Ge, Pb, Zn, Cd, In, Tl, Ga and an alloy thereof with (ii) at least one metal oxide and/or metalloid oxide selected from SiOₓ, AlOₓ, SnOₓ, SbOₓ, BiOₓ, AsOₓ, GeOₓ, PbOₓ, ZnOₓ, CdOₓ, InOₓ, TlOₓ and GaOₓ, wherein 0<x<2, to provide a first mixture, and mixing the first mixture with crystalline carbon to provide a second mixture; and
(2) carrying out mechanical alloying of the second mixture in the presence of balls.

11. A method according to Claim 10, wherein the first mixture produced in step (1) comprises the metal(s) and/or metalloid(s) and the metal oxide(s) and/or metalloid oxide(s) in a ratio of 5-95 parts by weight: 5-95 parts by weight.

12. A method according to Claim 10 or Claim 11, wherein the second mixture produced in step (1) comprises the first mixture and the crystalline carbon in a ratio of 30-70 parts by weight: 30-70 parts by weight.

13. A method according to any of Claims 10-12, wherein step (2) is carried out using the balls and the second mixture in a ratio of 50-98 parts by weight: 2-50 parts by weight.

14. A method according to any of Claims 10-13, wherein the balls used in step (2) are stainless steel balls or zirconia balls.

15. A method for preparing an electrode active material as defined in any of Claims 1-7, the method comprising the steps of:
(1) coating an amorphous carbon layer onto a core layer as defined in Claim 1 by a thin film vapour deposition process, or coating pitch or an organic precursor onto a core layer as defined in Claim 1 and heat-treating and carbonizing the resultant coating layer so as to form an amorphous carbon layer on the core layer; and
(2) coating a slurry containing a crystalline carbonaceous material onto the product of step (1), followed by drying, to form a crystalline carbon layer.

## Patentansprüche

1. Aktives Elektrodenmaterial umfassend
(a) eine Kernschicht enthaltend (i) wenigstens ein Metall und/oder Metalloid ausgewählt aus Si, Al, Sn, Sb, Bi, As, Ge, Pb, Zn, Cd, In, Tl, Ga und einer Legierung davon und (ii) wenigstens ein Metalloxid und/oder Metalloidoxid ausgewählt aus SiOₓ, AlOₓ, SnOₓ, SbOₓ, BiOₓ, AsOₓ, GeOₓ, PbOₓ, ZnOₓ, CdOₓ, InOₓ, TlOₓ und GaOₓ, worin 0<x<2;
(b) eine amorphe Kohlenstoffschicht, die auf die Oberfläche der Kernschicht beschichtet ist; und
(c) eine kristalline Kohlenstoffschicht, die auf die amorphe Kohlenstoffschicht beschichtet ist.

2. Aktives Elektrodenmaterial gemäß Anspruch 1, worin die kristalline Kohlenstoffschicht blattartige Kohlenstoffschichteinheiten umfasst, die miteinander verbunden sind, wobei jede blattartige Kohlenstoffschicht aus wenigstens zwei Kohlenstoffschichten mit der gleichen c-Achsenrichtung gebildet ist.

3. Aktives Elektrodenmaterial gemäß Anspruch 2, worin die c-Achsenrichtung der flächenartigen Kohlenstoffschichteinheiten rechtwinklig zu der Tangentialrichtung der aktiven Elektrodenmaterialteilchen ist.

4. Aktives Elektrodenmaterial gemäß einem der vorstehenden Ansprüche, worin das/die Metall(e) und/oder Metalloid(e) und das/die Metalloxid(e) und/oder Metalloidoxid(e) in einem Verhältnis von 5 bis 95 Gewichtsteilen : 5 bis 95 Gewichtsteilen vorliegen.

5. Aktives Elektrodenmaterial gemäß einem der vorstehenden Ansprüche, worin die Kernschicht, die amorphe Kohlenstoffschicht und die kristalline Kohlenstoffschicht in einem Verhältnis von 30 bis 70 Gewichtsteilen : 0,1 bis 50 Gewichtsteilen : 29,9 bis 70 Gewichtsteilen vorliegen.

6. Aktives Elektrodenmaterial gemäß einem der vorstehenden Ansprüche, worin die kristalline Kohlenstoffschicht einen Zwischenschichtabstand (d002) von 0,3354 bis 0,35 nm und eine Dicke von 1 bis 10 *µ*m aufweist.

7. Aktives Elektrodenmaterial gemäß einem der vorstehenden Ansprüche, worin die amorphe Kohlenstoffschicht einen Zwischenschichtabstand (d002) von 0,34 nm oder mehr und eine Dicke von 5 nm oder mehr aufweist.

8. Elektrochemische Vorrichtung umfassend ein aktives Elektrodenmaterial wie in einem der vorstehenden Ansprüche definiert.

9. Elektrochemische Vorrichtung gemäß Anspruch 8, die eine Sekundärbatterie ist.

10. Verfahren zum Herstellen eines aktiven Elektrodenmaterials wie in einem der Ansprüche 1 bis 7 definiert, wobei das Verfahren die Schritte umfasst:
(1) Mischen (i) von wenigstens einem Metall und/oder Metalloid ausgewählt aus Si, Al, Sn, Sb, Bi, As, Ge, Pb, Zn, Cd, In, Tl, Ga und einer Legierung davon mit (ii) wenigstens einem Metalloxid und/oder Metalloidoxid ausgewählt aus SiOₓ, AlOₓ, SnOₓ, SbOₓ, BiOₓ, AsOₓ, GeOₓ, PbOₓ, ZnOₓ, CdOₓ, InOₓ, TlOₓ und GaOₓ, worin 0<x<2 ist, um eine erste Mischung bereitzustellen, und Mischen der ersten Mischung mit kristallinem Kohlenstoff, um eine zweite Mischung bereitzustellen, und
(2) Durchführen von mechanischem Legieren der zweiten Mischung in Gegenwart von Kugeln.

11. Verfahren gemäß Anspruch 10, worin die erste Mischung, die in Schritt (1) hergestellt wird, das/die Metall(e) und/oder Metalloid(e) und das/die Metalloxid(e) und/oder Metalloidoxid(e) in einem Verhältnis von 5 bis 95 Gewichtsteilen : 5 bis 95 Gewichtsteilen umfasst.

12. Verfahren gemäß Anspruch 10 oder Anspruch 11, worin die zweite Mischung, die in Schritt (1) hergestellt wird, die erste Mischung und den kristallinen Kohlenstoff in einem Verhältnis von 30 bis 70 Gewichtsteilen : 30 bis 70 Gewichtsteilen umfasst.

13. Verfahren gemäß einem der Ansprüche 10 bis 12, worin Schritt (2) unter Verwendung der Kugeln und der zweiten Mischung einem Verhältnis von 50 bis 98 Gewichtsteilen : 2 bis 50 Gewichtsteilen durchgeführt wird.

14. Verfahren gemäß einem der Ansprüche 10 bis 13, worin die in Schritt (2) verwendeten Kugeln aus rostfreiem Stahl oder Kugeln aus Zirconia sind.

15. Verfahren zum Herstellen eines aktiven Elektrodenmaterials wie in einem der Ansprüche 1 bis 7 definiert, wobei das Verfahren die Schritte umfasst:
(1) Beschichten einer amorphen Kohlenstoffschicht auf eine Kernschicht wie in Anspruch 1 definiert durch ein Dünnschichtgasphasenabscheidungsverfahren oder durch beschichten von Pech oder einem organischen Vorläufer auf eine Kernschicht wie in Anspruch 1 definiert und Wärmebehandeln und Verkohlen der resultierenden Beschichtungsschicht, sodass eine amorphe Kohlenstoffschicht auf der Kernschicht gebildet wird; und
(2) Beschichten einer Aufschlämmung enthaltend ein kristallines Kohlenstoffmaterial auf das Produkt des Schritts (1), gefolgt von Trocknen, sodass eine kristalline Kohlenstoffschicht gebildet wird.

## Revendications

1. Matériau actif d'électrode, comprenant :
(a) une couche centrale contenant (i) au moins un métal et/ou un métalloïde choisi parmi Si, Al, Sn, Sb, Bi, As, Ge, Pb, Zn, Cd, In, Tl, Ga et un alliage de ceux-ci, et (ii) au moins un oxyde de métal et/ou un oxyde de métalloïde choisi parmi SiOₓ, AlOₓ, SnOₓ, SbOₓ, BiOₓ, AsOₓ, GeOₓ, PbOₓ, ZnOₓ, CdOₓ, InOₓ, TlOₓ et GaOₓ, où 0<x<2;
(b) une couche de carbone amorphe recouvrant la surface de la couche centrale ; et
(c) une couche de carbone cristallin recouvrant le couche de carbone amorphe.

2. Matériau actif d'électrode selon la revendication 1, dans lequel la couche de carbone cristallin comprend des unités de couche de carbone de type feuille reliées les unes aux autres, chaque unité de couche de carbone de type feuille étant formée d'au moins deux couches de carbone ayant la même direction selon l'axe c.

3. Matériau actif d'électrode selon la revendication 2, dans lequel la direction selon l'axe c des unités de couche de carbone de type feuille est perpendiculaire à la direction tangente des particules de matériau actif d'électrode.

4. Matériau actif d'électrode selon l'une quelconque des revendications précédentes, dans lequel le ou les métaux et/ou métalloïdes et le ou les oxydes de métaux et/ou oxydes de métalloïdes sont dans un rapport de 5 à 95 parties en poids : 5 à 95 parties en poids.

5. Matériau actif d'électrode selon l'une quelconque des revendications précédentes, dans lequel la couche centrale, la couche de carbone amorphe et la couche de carbone cristallin sont dans un rapport de 30 à 70 parties en poids : 0,1 à 50 parties en poids : 29,9 à 70 parties en poids.

6. Matériau actif d'électrode selon l'une quelconque des revendications précédentes, dans lequel la couche de carbone cristallin présente une distance inter-couche (d002) de 0,3354 nm à 0,35 nm et une épaisseur de 1 µm à 10 µm.

7. Matériau actif d'électrode selon l'une quelconque des revendications précédentes, dans lequel la couche de carbone amorphe présente une distance inter-couche (d002) de 0,34 nm ou plus et une épaisseur de 5 nm ou plus.

8. Dispositif électrochimique comprenant un matériau actif d'électrode tel que défini dans l'une quelconque des revendications précédentes.

9. Dispositif électrochimique selon la revendication 8, qui est une batterie rechargeable.

10. Procédé de préparation d'un matériau actif d'électrode tel que défini dans l'une quelconque des revendications 1 à 7, le procédé comprenant les étapes de :
(1) mélange (i) d'au moins un métal et/ou métalloïde choisi parmi Si, Al, Sn, Sb, Bi, As, Ge, Pb, Zn, Cd, In, Tl, Ga et un alliage de ceux-ci avec (ii) au moins un oxyde de métal et/ou oxyde de métalloïde choisi parmi SiOₓ, AlOₓ, SnOₓ, SbOₓ, BiOₓ, AsOₓ, GeOₓ, PbOₓ, ZnOₓ, CdOₓ, InOₓ, TlOₓ et GaOₓ, où 0 < x < 2, pour obtenir un premier mélange, et mélange du premier mélange avec du carbone cristallin pour obtenir un second mélange ; et
(2) mise en oeuvre d'un broyage à haute énergie du second mélange en présence de billes.

11. Procédé selon la revendication 10, dans lequel le premier mélange produit dans l'étape (1) comprend le ou les métaux et/ou métalloïdes et le ou les oxydes de métaux et/ou oxydes de métalloïdes dans un rapport de 5 à 95 parties en poids : 5 à 95 parties en poids.

12. Procédé selon la revendication 10 ou la revendication 11, dans lequel le second mélange produit dans l'étape (1) comprend le premier mélange et le carbone cristallin dans un rapport de 30 à 70 parties en poids : 30 à 70 parties en poids.

13. Procédé selon l'une quelconque des revendications 10 à 12, dans lequel l'étape (2) est réalisée en utilisant les billes et le second mélange dans un rapport de 50 à 98 parties en poids : 2 à 50 parties en poids.

14. Procédé selon l'une quelconque des revendications 10 à 13, dans lequel les billes utilisées dans l'étape (2) sont des billes en acier inoxydable ou des billes en zircone.

15. Procédé de préparation d'un matériau actif d'électrode tel que défini dans l'une quelconque des revendications 1 à 7, le procédé comprenant les étapes de :
(1) revêtement d'une couche de carbone amorphe sur une couche centrale telle que définie dans la revendication 1 grâce à un procédé de dépôt en phase vapeur de couche mince, ou revêtement de brai ou d'un précurseur organique sur une couche centrale telle que définie dans la revendication 1 et traitement thermique et carbonisation de la couche de revêtement résultante afin de former une couche de carbone amorphe sur la couche centrale ; et
(2) revêtement d'une suspension contenant un matériau carboné cristallin sur le produit de l'étape (1), suivi d'un séchage, afin de former une couche de carbone cristallin.
